# EUROPÄISCHE PATENTSCHRIFT

(11) **EP 1 424 161 B1**
(45) Veröffentlichungstag und Bekanntmachung des Hinweises auf die Patenterteilung: **27.09.2006**
(21) Anmeldenummer: 03405811.5
(22) Anmeldetag: 13.11.2003
(51) Int. Cl.: B23Q 1/01, B23Q 11/00

(54) **Vorrichtung zum Tragen und Befestigen eines Roboters**
Device for supporting and fixing a robot
Dispositif de support et de fixation pour robot

(30) Priorität: 29.11.2002 CH 20182002
(43) Veröffentlichungstag der Anmeldung: 02.06.2004
(73) Patentinhaber: ROBERT BOSCH GMBH, 70442 Stuttgart (DE)
(72) Erfinder: Burkert, Wolfgang, 8213 Neunkirch (CH); Lenherr, Harald, 8222 Beringen (CH)
(74) Vertreter: Clerc, Natalia

(56) Entgegenhaltungen:
- DE-C- 10 051 707
- US-A- 4 407 625
- US-A- 4 746 255

## Beschreibung

### Technisches Gebiet

Die Erfindung betrifft eine Vorrichtung zum Tragen und Befestigen eines Roboters gemäss Oberbegriff des Patentanspruchs 1. Die Vorrichtung eignet sich insbesondere zur Befestigung von im dreidimensionalen Raum bewegbaren Robotern, insbesondere von Deltarobotern.

### Stand der Technik

Ein Roboter, das heisst die eigentliche Betätigungseinheit, muss in einer Trägervorrichtung befestigt werden. Diese Trägervorrichtung sollte möglichst stabil sein und gute schwingungsdämpfende Eigenschaften aufweisen. Zudem sollte sie dem Roboter eine grösstmögliche Bewegungsfreiheit erlauben.

Im dreidimensionalen Raum bewegbare Roboter werden üblicherweise in Rahmengestellen aus Stahl, sogenannten Zellen, angeordnet. Diese Rahmengestelle umfassen untere und obere horizontale Komponenten, welche über eine vertikale Komponente miteinander verbunden sind. Diese Rahmengestelle sind zwar stabil. Sie lassen sich auch gut reinigen, was insbesondere beim Einsatz des Roboters in der Nahrungsmittelindustrie eine zwingende Voraussetzung ist. Nachteilig ist jedoch, dass die Trägervorrichtung relativ viel Platz beansprucht, so dass die einzelnen Roboter nicht in beliebiger Anordnung aufgestellt werden können. Der Platzbedarf wird durch zugehörige Schaltschränke noch erhöht. Ferner sind diese Trägervorrichtungen relativ teuer. Gründe hierfür sind der Materialbedarf an Stahl, insbesondere Edelstahl, und die aufwendige Herstellung, da die einzelnen Streben und Stützen miteinander verschweisst und/oder verschraubt werden müssen.

Ferner ist aus DE-A-100'64'217 eine Betätigungseinheit bekannt, welche gemeinsam mit ihrer Trägervorrichtung eine galgenförmige Gestalt aufweist. Die Trägervorrichtung als solche besteht aus einem horizontal verlaufenden Sockel und einem leicht gekrümmten säulenartigen Festausleger. Am oberen Ende des Festauslegers ist ein Drehblock der Betätigungseinheit angeordnet, in welchem ein horizontal verlaufender Arm der Betätigungseinheit gelagert ist. Der Arm ist dabei um vier Achsen schwenkbar.

Des weiteren offenbart US-A-4'746'255 eine Trägervorrichtung für eine Betätigungseinheit, welche ebenfalls gemeinsam mit der Betätigungseinheit galgenförmig ausgebildet ist. Die Trägervorrichtung selber besteht aus einem horizontal verlaufenden Fuss und einer vertikal am Fuss angeordneten Säule. An dieser Säule ist ein bewegbarer Arm der Betätigungseinheit angeordnet, welcher entlang der Säule geführt verschiebbar ist. Am Arm sind weitere Komponenten der Betätigungseinheit in Längsrichtung des Arms verschiebbar angeordnet.

Die DE 100 51 707 C1 offenbart einen Maschinenständer für Höchstpräzisions-Mikro-Fräs- und Bohrmaschinen oder dergleichen mit den Merkmalen des Oberbegriffs des Anspruchs 1. Der Maschinenständer ist als Hohlkörper aus Grauguss, Stahl oder faserverstärktem Kunststoff ausgebildet, der in Bereichen hoher Torsions- und/oder Biegemomente mit Polymerbeton ausgegossen ist, so dass dort eine Verbundkonstruktion besteht.

### Darstellung der Erfindung

Es ist Aufgabe der Erfindung, eine Vorrichtung zum Tragen und Befestigen eines Roboters, insbesondere eines Deltaroboters, zu schaffen, welche möglichst platzsparend ist und trotzdem gute schwingungsdämpfende Eigenschaften aufweist.

Diese Aufgabe löst eine Vorrichtung mit den Merkmalen des Patentanspruchs 1.

Die erfindungsgemässe Vorrichtung zum Tragen und Befestigen eines Roboters ist galgenförmig ausgebildet mit einem Fuss, einer am Fuss anschliessenden Säule und mindestens einem an dieser Säule befestigbaren Auslegerarm zur Befestigung des Roboters. Dabei ist der mindestens eine Auslegerarm lagefixiert an der Säule befestigt. Der mindestens eine Auslegerarm ist vorzugsweise ausschliesslich an dieser Säule befestigt. Dieser galgenförmige Aufbau ermöglicht eine platzsparende Gestaltung der Vorrichtung und erlaubt trotzdem einen grösstmöglichen Bewegungsfreiraum für den daran befestigten Roboter.

Da die Vorrichtung mindestens teilweise aus einem Verbundwerkstoff, insbesondere aus Mineralguss, besteht, wirkt sie zudem schwingungsdämpfend, was insbesondere bei Verwendung von Hochleistungsrobotern, wie beispielsweise Deltarobotern, eine notwendige Bedingung ist.

Die Säule weist eine Nische zur Aufnahme von mindestens einem Teil der Komponenten einer Steuerungselektronik auf. Dadurch erübrigt sich ein zusätzlicher Schaltschrank, was wiederum den Platzbedarf massiv reduziert.

Die erfindungsgemässe Vorrichtung ist zudem einfach und kostengünstig herstellbar.

Weitere vorteilhafte Ausführungsformen gehen aus den abhängigen Patentansprüchen hervor.

### Kurze Beschreibung der Zeichnung

Im folgenden wird der Erfindungsgegenstand anhand von bevorzugten Ausführungsbeispielen, welche in der beiliegenden Zeichnung dargestellt sind, erläutert. Es zeigen:
- Figur 1: eine perspektivische Darstellung einer erfindungsgemässen Vorrichtung gemäss einer ersten Ausführungsform mit einem daran befestigten Deltaroboter;
- Figur 2: eine perspektivische Darstellung einer erfindungsgemässen Vorrichtung gemäss einer zweiten Ausführungsform mit einem daran befestigten Deltaroboter;
- Figur 3: eine perspektivische Darstellung einer erfindungsgemässen Vorrichtung gemäss einer dritten Ausführungsform mit einem daran befestigten Deltaroboter;
- Figur 4: eine erste Anordnung von mehreren erfindungsgemässen Vorrichtungen entlang einer Pickerstrasse;
- Figur 5: eine zweite Anordnung und
- Figur 6: eine dritte Anordnung.

### Wege zur Ausführung der Erfindung

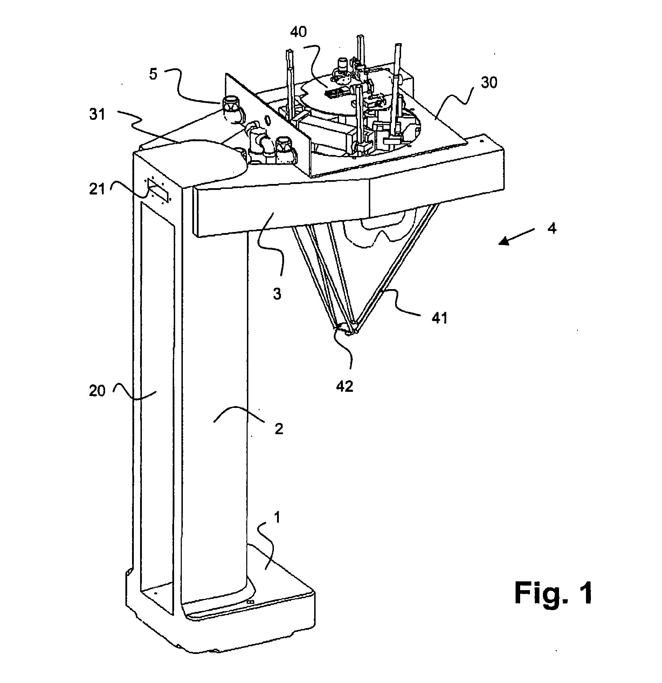

In Figur 1 ist ein erstes Ausführungsbeispiel einer erfindungsgemässen Vorrichtung dargestellt. Die Vorrichtung ist galgenförmig gestaltet und weist drei Komponenten auf: eine untere horizontale, eine vertikale und eine obere im wesentlichen horizontale Komponente. Diese Komponenten werden in dieser Reihenfolge durch einen Fuss 1, eine am Fuss 1 anschliessende Säule 2 und mindestens einem Auslegerarm 3 gebildet. Vorzugsweise erstreckt sich der Auslegerarm 3 in genau horizontaler Richtung. Es ist jedoch auch möglich, dass er einen nicht rechten Winkel zur Säule 2 bildet. Der Fuss 1 erstreckt sich vorzugsweise in dieselbe Richtung wie der mindestens eine Auslegerarm 3, ist jedoch üblicherweise kürzer ausgebildet. Vorzugsweise stehen Fuss 1 und/oder der mindestens eine Auslegerarm 3 auf der entgegengesetzten Seite der Säule 2 nicht vor.

Fuss 1 und Säule 2 sind vorzugsweise, wie hier dargestellt, zusammen einstückig gefertigt. Sie lassen sich jedoch aus zwei oder mehreren Teilen zusammensetzen. Der mindestens eine Auslegerarm 3 ist an der Säule 2 lagefixiert befestigt. Vorzugsweise ist er ausschliesslich an dieser Säule 2 befestigt.

Hier sind zwei Auslegerarme 3 vorhanden, welche zueinander spiegelsymmetrisch ausgebildet sind. Sie sind auf gleicher Höhe, aber beabstandet voneinander an der Säule 2 angeordnet. Es ist auch möglich, einen einzigen Auslegerarm zu verwenden, welcher, im vorderen, der Säule 2 abgewandten Ende, gabelförmig ausgebildet ist. Im Zwischenraum zwischen den Auslegerarmen 3 beziehungsweise der Gabel lässt sich ein Roboter 4 anordnen. Im hier dargestellten Ausführungsbeispiel ist dies ein Deltaroboter.

Derartige Deltaroboter sind bekannt. Sie sind beispielsweise in US-A-4'976'582 beschrieben. Der Deltaroboter 4 weist eine Basisplatte 40 mit daran befestigten Motoren auf. Die Achsen der drei Motoren bilden ein gleichseitiges Dreieck. An der Basisplatte 40 sind schwenkbare Roboterarme 41 angeordnet, welche an ihrem unteren, von der Basisplatte 40 beabstandeten, Ende schwenkbar an einer Pickerplatte 42 befestigt sind. An der Pickerplatte 42 ist ein Greifmittel zur Erfassung und Umsetzung eines Stückguts angeordnet. Beispielsweise ist das Greifmittel ein Saugelement. Derartige Roboter können zudem eine vierte Achse aufweisen, welche sich von der Basisplatte 40 zur Pickerplatte 42 erstreckt und zur Betätigung des Greifmittels dient.

Zur Befestigung des Roboters 4 ist eine Tragplatte 30 vorhanden, welche auf den zwei Auslegerarmen 3 aufgelegt und dort befestigt ist. Beispielsweise ist sie angeschraubt. Diese Tragplatte 30 weist eine kreisförmige zentrale Öffnung auf, in welcher der Roboter 4 eingelassen ist. Die Basisplatte 40 ist mit geeigneten Mitteln an der Tragplatte 30 befestigt. Andere Befestigungsarten sind jedoch auch möglich. Insbesondere hängt die Befestigungsart von der Art des verwendeten Roboters ab. Stets wird der Roboter jedoch am mindestens einen Auslegerarm 3 einstellbar befestigt.

In Figur 1 sind zudem Anschlüsse 5 für die Pneumatik zur Betätigung des Roboters dargestellt. Diese sind vorzugsweise benachbart zur Säule 2 angeordnet.

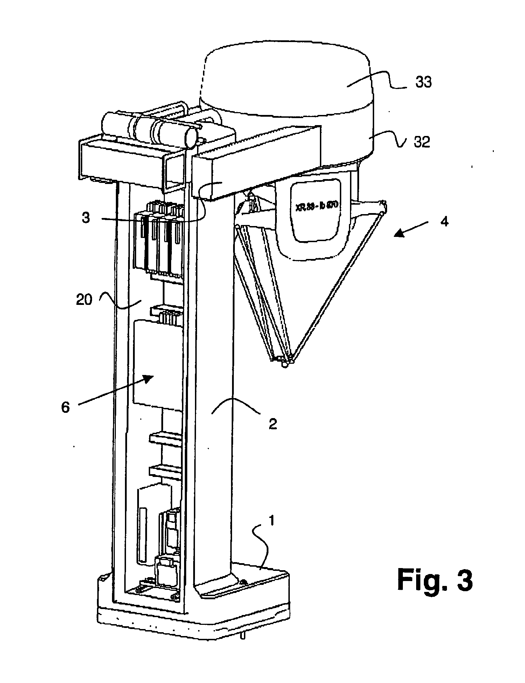

Die Säule 2 weist zudem mindestens eine Nische 20 auf. Diese erstreckt sich vorzugsweise über mindestens annähernd die gesamte Länge der Säule 2. In dieser Nische 20 lassen sich elektrische Leitungen sowie Komponenten der Steuerungselektronik, ein PC, Transformatoren und ähnliches unterbringen. Vorzugsweise ist die gesamte dem Roboter zugehörige Steuerungselektronik 6 darin untergebracht, wie dies in Figur 3 dargestellt ist. Dadurch erübrigt sich ein separater Schaltschrank. Es ist auch möglich, Komponenten der Pneumatik, insbesondere pneumatische Zuleitungen, in der Nische 20 unterzubringen. Sollen sowohl elektronische als auch pneumatische Komponenten untergebracht werden, so empfiehlt es sich, zwei voneinander getrennte Nischen 20 vorzusehen. Um die einzelnen Komponenten einfacher montieren zu können, verfügt die Nische 20 vorzugsweise über Haltemittel, welche beispielsweise, bei Verwendung von Mineralguss als Säulenwerkstoff, bereits in den Fertigungsprozess des Säulen-Hohlkörpers integriert werden können.

Die Säule 2 weist ferner mindestens eine Durchführungsöffnung 21 zur Durchführung von Zuleitungen auf. Hier wird die Nische 20 ausschliesslich für Elektronikkomponenten verwendet. Die Durchführungsöffnung 21 dient beispielsweise zur Aufnahme der Kommunikationskabel von erfindungsgemässen Vorrichtungen V untereinander innerhalb einer Pickerstrasse und/oder von elektrischen Leitungskabeln.

Mindestens ein Teil der Vorrichtung besteht aus einem Verbundwerkstoff. Vorzugsweise bestehen die Säule 2 und der Fuss 1 vollständig aus einem Verbundwerkstoff. Die Auslegerarme 3 sind in einer ersten Variante ebenfalls vollständig aus einem Verbundwerkstoff gefertigt und bildet somit einen Vollkörper. In einer zweiten Variante weisen sie einen Kern aus einem Verbundwerkstoff und eine äussere Hülle aus einem anderen Werkstoff, insbesondere aus Edelstahl, auf. In einer dritten Ausführungsform sind die Auslegerarme 3 innen hohl ausgebildet, so dass Leitungen für den Roboter 4 durchgeführt werden können. In diesem Fall besteht der Hohlkörper vorzugsweise aus einem Verbundwerkstoff, insbesondere aus Mineralguss.

Als Verbundwerkstoff eignet sich insbesondere ein Mineralguss. Üblicherweise besteht dieser Verbundwerkstoff im wesentlichen aus circa 90-93% Mineralien und Gesteinen und aus 7-10% Epoxydharz. Mineralguss ist im Maschinenbau bekannt. Die Rezeptur variiert je nach Gesteinstyp und Korngrösse. Bewährt hat sich für die erfindungsgemässe Vorrichtung ein 3-komponentiger Reaktionsharzbeton auf Epoxydharzbasis mit einer Füllstoffkombination auf quarzidischer Basis. Andere Zusammensetzungen sind jedoch auch möglich.

Körper aus Mineralguss zeichnen sich durch eine hohe mechanische Festigkeit und hervorragende Schwingungsdämpfungseigenschaften aus, welche circa 10 mal besser ist als bei Körpern aus Grauguss. Da die Körper im Kaltguss hergestellt werden, ist eine breite Palette von Gestaltungsformen möglich. Insbesondere die oben erwähnten Nischen 20 und die im Hohlraum ausgebildeten Haltemittel lassen sich auf einfachste Weise herstellen. Weitere Eigenschaften sind die gute chemische Beständigkeit, die thermische Stabilität und die relativ kostengünstige Herstellung.

Der Mineralguss lässt sich zudem mit Additiven versehen. Vorzugsweise ist der in der erfindungsgemässen Vorrichtung eingesetzte Mineralguss deshalb mit mindestens einem Additiv versehen, welches eine Mikroorganismen hemmende Wirkung aufweist. Dies ist vor allem beim Einsatz in der Lebensmittelindustrie vorteilhaft.

Komponenten aus Mineralguss lassen sich zudem auf einfache Art und Weise miteinander verbinden. Vorzugsweise ist deshalb der mindestens eine Auslegerarm 3 mit der Säule 2 verklebt, wobei als Klebstoff insbesondere ein Mineralguss feinster Körnung geeignet ist. Dies verkürzt die Montagezeit und reduziert somit wiederum die Herstellungskosten. Diese Klebverbindung weist noch weitere Vorteile auf. Die durch die Klebverbindung entstehende homogene Oberfläche lässt sich auf einfache Art und Weise reinigen. Zudem wird die Steifigkeit der Vorrichtung erhöht.

Die Klebverbindung wird erleichtert, wenn Säule 2 und Auslegerarm 3 entsprechend geformt sind. In diesem Beispiel weist die Säule 2 einen u-förmigen Querschnitt auf, wobei die gebogene Fläche den Auslegerarmen 3 zugewandt ist. Die Auslegerarme 3 verfügen über eine gebogene Einbuchtung 31, deren Krümmungsradius dem Krümmungsradius der äusseren Mantelfläche der Säule 2 entspricht.

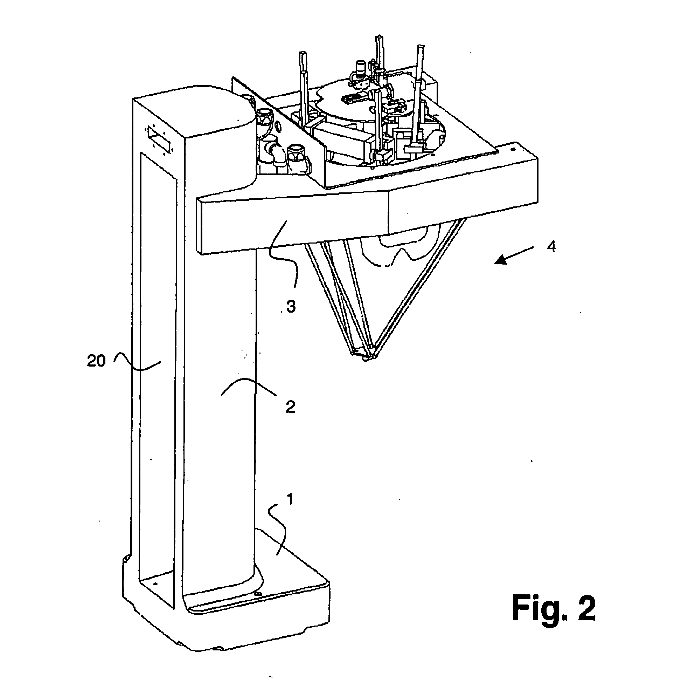

Vorzugsweise verfügt die Säule 2 mindestens über einen Teil ihrer Länge über einen gleichbleibenden Querschnitt, so dass die Auslegerarme 3 je nach Einsatzbereich und aufzunehmenden Roboter auf einer beliebigen Höhe an der Säule 2 befestigt werden können. In Figur 1 sind sie am oberen Ende der Säule 2 angeordnet. Im Ausführungsbeispiel gemäss Figur 2 sind sie weiter unten angeordnet. Dies reduziert die Herstellungskosten wiederum, da dieselbe Vorrichtung für verschiedene Anwendungsbereiche einsetzbar ist. Lediglich die Auslegerarme 3 müssen auf der gewünschten, vorbestimmten Höhe montiert werden. Hierzu reicht jedoch eine einfache Schablone oder ein schlichtes Messen der Höhe aus.

In der Ausführungsform gemäss Figur 3 ist eine andere Befestigungsart für einen Roboter dargestellt. An der Säule 2 sind wiederum auf gleicher Höhe beabstandet voneinander Auslegerarme 3 angeordnet. Diese Auslegerarme 3 gehen an ihrem vorderen, der Säule 2 abgewandten Ende in eine kreisförmige Roboteraufnahme 32 über. In dieser Roboteraufnahme 32 ist der Roboter 4, hier wiederum ein Deltaroboter, befestigt. Die Roboteraufnahme 32 ist zum Schutz der Elektronik des Roboters 4 mit einem Deckel 33 geschlossen.

Der Roboter 4 lässt sich auch befestigen, indem auf jeden Auslegerarm 3 ein Träger aufgelegt und mit diesem verbunden wird. An diesem Träger lässt sich der Roboter befestigen. So lässt sich beispielsweise auf kostengünstige Weise der Roboter oberhalb der maximalen Länge der Säule 2 anordnen.

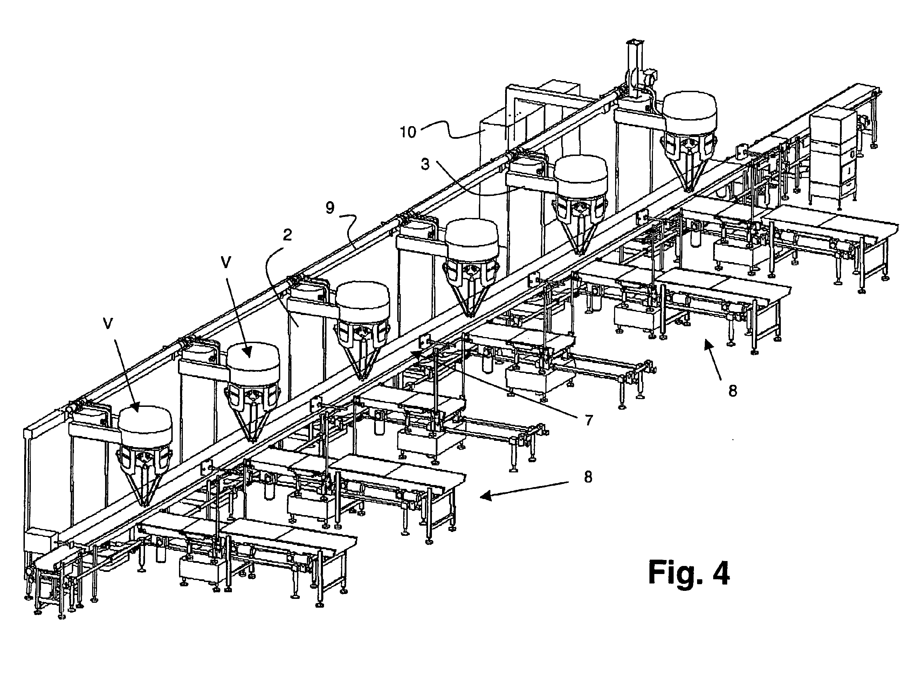

In den Figuren 4 bis 6 sind verschiedene Anordnungen der erfindungsgemässen Vorrichtung im Einsatz dargestellt. Figur 4 zeigt eine Pickerstrasse mit einer geradlinigen Förderstrecke 7, an welche Zubringstationen 8 angrenzen. An jeder Zubringstation 8 ist auf der gegenüberliegenden Seite der Förderstrecke 7 eine erfindungsgemässe Vorrichtung V mit einem Roboter 4 angeordnet. Da jeder Roboter seine Steuerelektronik in der Säule 2 der zugehörigen Trägervorrichtung V integriert hat, sind keine separaten Schaltschränke vorhanden. Lediglich ein zentraler Schaltschrank 10 ist an einem Ende der Pickerstrasse vorhanden, um die einzelnen Roboter zu koordinieren. Die Zuleitungen zu den einzelnen Robotern wie auch die pneumatische und elektrische Versorgung erfolgen über die gemeinsame Verbindungsleitung 9.

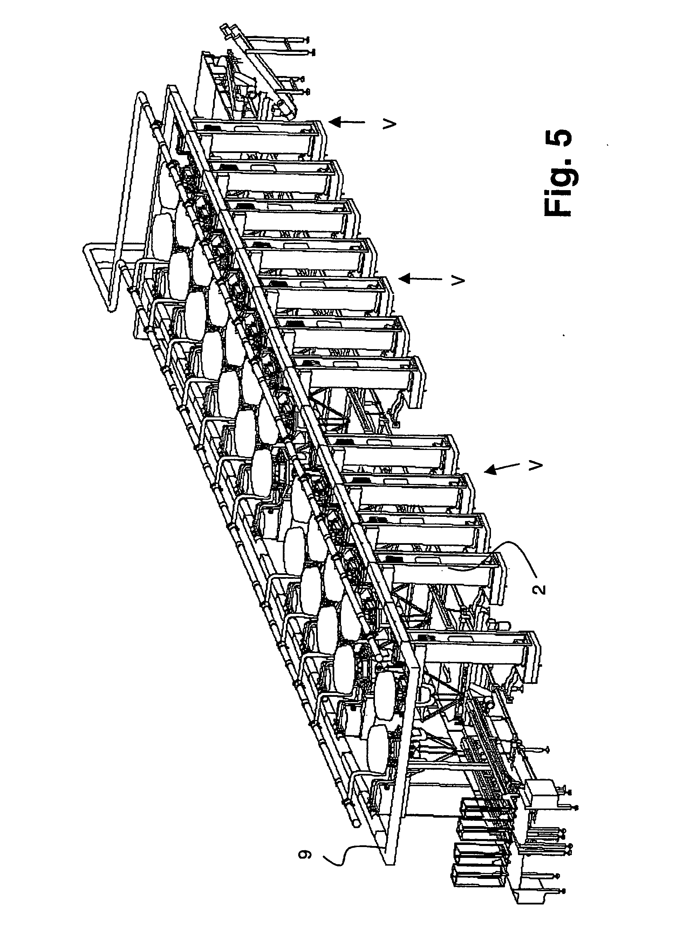

In Figur 5 ist eine ähnliche Anordnung gezeigt, wobei hier beidseits der Pickerstrasse Trägervorrichtungen V mit Robotern angeordnet sind.

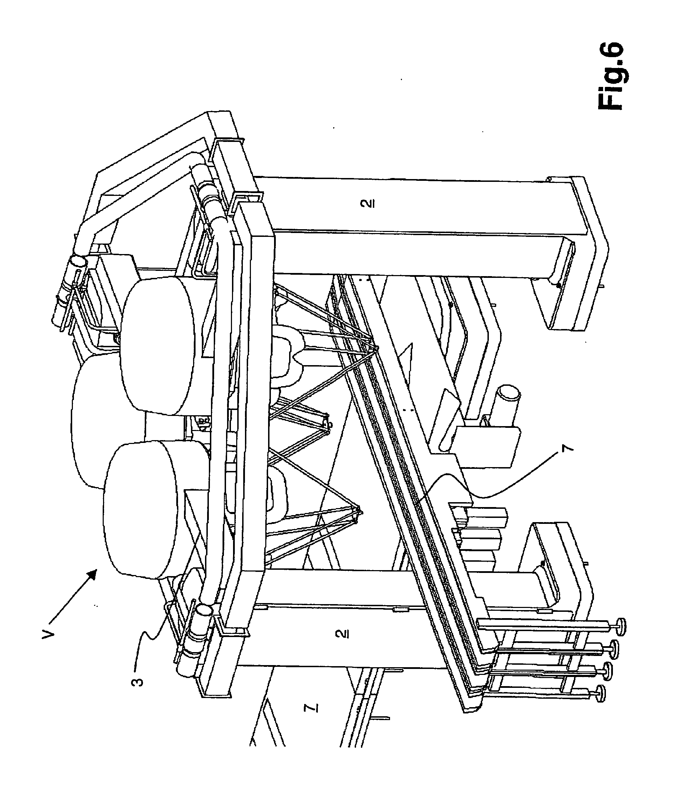

Wie in Figur 6 erkennbar ist, lassen sich die erfindungsgemässen Vorrichtungen V auch äusserst platzsparend in einem Dreieck anordnen. Dies ist insbesondere bei Kreuzungen von zwei Förderstrecken 7 von Vorteil.

Die erfindungsgemässe Vorrichtung zum Tragen und Befestigen eines Roboters ist somit äusserst platzsparend und weist trotzdem gute schwingungsdämpfende Eigenschaften auf.

### Bezugszeichenliste

- 1: Fuss
- 2: Säule
- 20: Nische
- 3: Auslegerarm
- 30: Tragplatte
- 31: Einbuchtung
- 32: Roboteraufnahme
- 33: Deckel
- 4: Roboter
- 40: Basisplatte
- 41: Roboterarme
- 42: Pickerplatte
- 5: Anschlussleitungen
- 6: Steuerungselektronik
- 7: Förderstrecke
- 8: Zubringstationen
- 9: Verbindungsleitung
- 10: Zentraler Schaltschrank
- V: erfindungsgemässe Vorrichtung

## Patentansprüche

1. Vorrichtung zum Tragen und Befestigen eines Roboters (4), insbesondere eines Deltaroboters, wobei die Vorrichtung eine untere horizontale Komponente, eine vertikale Komponente und eine obere mindestens annähernd horizontal verlaufende Komponente aufweist und galgenförmig ausgebildet ist mit einem Fuss (1) als untere horizontale Komponente, einer am Fuss (1) anschliessenden Säule (2) als vertikale Komponente und mindestens einem an dieser Säule (2) befestigten Auslegerarm (3) als obere Komponente zur Befestigung des Roboters (4), wobei der mindestens eine Auslegerarm (3) lagefixiert an der Säule (2) befestigt ist, und wobei die Vorrichtung mindestens teilweise aus einem Verbundwerkstoff besteht, **dadurch gekennzeichnet, dass** die Säule (2) mindestens eine Nische (20) zur Aufnahme von Komponenten einer Steuerungselektronik und/oder von pneumatischen Komponenten für den Roboter (4) aufweist.

2. Vorrichtung nach Anspruch 1, **dadurch gekennzeichnet, dass** der mindestens eine Auslegerarm (3) ausschliesslich an der Säule (2) befestigt ist.

3. Vorrichtung nach einem der Ansprüche 1 oder 2, **dadurch gekennzeichnet, dass** der Fuss (1), die Säule (2) und der mindestens eine Auslegerarm (3) mindestens teilweise aus einem Verbundwerkstoff, insbesondere aus einem Mineralguss, bestehen.

4. Vorrichtung nach Anspruch 3, **dadurch gekennzeichnet, dass** der Mineralguss mindestens ein Additiv enthält, welches eine Mikroorganismen hemmende Wirkung aufweist.

5. Vorrichtung nach einem der Ansprüche 1 bis 4, **dadurch gekennzeichnet, dass** der mindestens eine Auslegerarm (3) einen Kern aus einem Verbundwerkstoff und eine äussere Hülle aus einem anderen Werkstoff, insbesondere aus Edelstahl, aufweist.

6. Vorrichtung nach einem der Ansprüche 1 bis 5, **dadurch gekennzeichnet, dass** der mindestens eine Auslegerarm (3) als Vollkörper ausgebildet ist.

7. Vorrichtung nach einem der Ansprüche 1 bis 6, **dadurch gekennzeichnet, dass** zwei Auslegerarme (3) vorhanden sind, welche auf gleicher Höhe aber beabstandet voneinander an der Säule (2) angeordnet sind zur Aufnahme des Roboters (4) im dazwischen entstehenden Zwischenraum.

8. Vorrichtung nach einem der Ansprüche 1 bis 7, **dadurch gekennzeichnet, dass** der mindestens eine Auslegerarm (3) durch ein Klebemittel, insbesondere durch einen Mineralguss, mit der Säule (2) verbunden ist.

9. Vorrichtung nach einem der Ansprüche 1 bis 8, **dadurch gekennzeichnet, dass** der Fuss (1) und der mindestens eine Auslegerarm (3) sich in dieselbe Richtung von der Säule (2) weg erstrecken und in der entgegengesetzten Richtung die Säule (2) nicht überragen.

## Claims

1. Device for supporting and fastening a robot (4), in particular a delta robot, wherein the device has a lower horizontal component, a vertical component and a upper at least approximately horizontal component, and wherein it is designed in a gallows shape having a foot (1) as lower horizontal component, a column (2), adjoining the foot (1), as vertical component, and at least one cantilever arm (3), fastened to this column (2), as upper component for fastening the robot (4), wherein the at least one cantilever arm (3) being fastened to the column (2) in a fixed position, and wherein the device consists at least partly of a composite material, **characterized in that** the column (2) has at least one niche (20) for accommodating components of control electronics and/or pneumatic components for the robot (4).

2. Device according to claim 1, **characterized in that** the at least one cantilever arm (3) is fastened solely to the column (2).

3. Device according to any of the claims 1 or 2, **characterized in that** the foot (1), the column (2) and the at least one cantilever arm (3) consist at least partly of a composite material, in particular a cast mineral.

4. Device according to claim 3, **characterized in that** the cast mineral contains at least one additive which has an effect inhibiting microorganisms.

5. Device according to any of the claims 1 to 4, **characterized in that** the at least one cantilever arm (3) has a core consisting of a composite material and an outer envelope consisting of another material, in particular high-grade steel.

6. Device according to any of the claims 1 to 5, **characterized in that** the at least one cantilever arm (3) is designed as a solid body.

7. Device according to any of the claims 1 to 6, **characterized in that** there are two cantilever arms (3) which are arranged on the column (2) at the same height, but at a distance from one another, for accommodating the robot (4) in the intermediate space produced in between.

8. Device according to any of the claims 1 to 7, **characterized in that** the at least one cantilever arm (3) is connected to the column (2) by an adhesive, in particular by a cast mineral.

9. Device according to any of the claims 1 to 8, **characterized in that** the foot (1) and the at least one cantilever arm (3) extend in the same direction away from the column (2) and do not project beyond the column (2) in the opposite direction.

## Revendications

1. Dispositif de support et de fixation d'un robot (4), notamment d'un robot delta, dans lequel le dispositif présente un composant horizontal inférieur, un composant vertical et un composant supérieur s'étendant au moins approximativement horizontalement, et est réalisé en forme de potence, comprenant une base (1) servant de composant horizontal inférieur, une colonne (2) se raccordant à la base (1) en tant que composant vertical et au moins un bras de potence (3) fixé à cette colonne (2) en tant que composant supérieur pour la fixation du robot (4), l'au moins un bras de potence (3) étant fixé en position sur la colonne (2) et le dispositif se composant au moins en partie d'un matériau composite, **caractérisé en ce que** la colonne (2) présent au moins une niche (20) pour recevoir des composants d'une électronique de commande et/ou des composants pneumatiques pour le robot (4).

2. Dispositif selon la revendication 1, **caractérisé en ce que** l'au moins un bras de potence (3) est fixé exclusivement à la colonne (2).

3. Dispositif selon l'une quelconque des revendications 1 ou 2, **caractérisé en ce que** la base (1), la colonne (2) et l'au moins un bras de potence (3) se composent au moins en partie d'un matériau composite, notamment d'une fonte minérale.

4. Dispositif selon la revendication 3, **caractérisé en ce que** la fonte minérale contient au moins un additif qui présente une activité d'inhibition des microorganismes.

5. Dispositif selon l'une quelconque des revendications 1 à 4, **caractérisé en ce que** l'au moins un bras de potence (3) présente un noyau en matériau composite et une gaine extérieure en un autre matériau, notamment en acier spécial.

6. Dispositif selon l'une quelconque des revendications 1 à 5, **caractérisé en ce que** l'au moins un bras de potence (3) est réalisé sous forme de corps massif.

7. Dispositif selon l'une quelconque des revendications 1 à 6, **caractérisé en ce que** deux bras de potence (3) sont prévus, lesquels sont disposés à la même hauteur mais espacés l'un de l'autre sur la colonne (2) pour recevoir le robot (4) dans l'espace intermédiaire prévu entre eux.

8. Dispositif selon l'une quelconque des revendications 1 à 7, **caractérisé en ce que** l'au moins un bras de potence (3) est connecté par un moyen adhésif, notamment une fonte minérale, à la colonne (2).

9. Dispositif selon l'une quelconque des revendications 1 à 8, **caractérisé en ce que** la base (1) et l'au moins un bras de potence (3) s'étendent dans la même direction depuis la colonne (2) et ne dépassent pas de la colonne (2) dans la direction opposée.
